# EUROPEAN PATENT APPLICATION

(11) **EP 4 831 086 A1**
(43) Date of publication of application: **28.10.2026**
(21) Application number: 25171819.3
(22) Date of filing: 22.04.2025
(51) Int. Cl.: B65G 1/04

(54) **A DEVICE FOR HANDLING CONTAINERS**

(71) Applicant: AutoStore Technology AS, 5578 Nedre Vats (NO)
(72) Inventor: Nordtveit, Henning, 5578 Nedre Vats (NO); Gjerdevik, Øystein, 5578 Nedre Vats (NO); Hörnlund, Staffan, 5578 Nedre Vats (NO); Myrbakken, Joakim Aleksander, 5578 Nedre Vats (NO); Håland, Christian, 5578 Nedre Vats (NO)
(74) Representative: Kilburn & Strode LLP

(57) **Abstract**

The disclosure relates to a device for handling containers in an automated storage and retrieval system of the type comprising a grid having a plurality of vertical columns in which storage containers can be stacked on top of each other, between which vertical columns at least one robotic container handling vehicle is enabled to move, for retrieving storage containers by lifting them out of the vertical columns and for storing storage containers by lowering them into the vertical columns, wherein the device comprises: a housing; a lifting frame arranged for gripping a container; and means for raising and lowering the lifting frame with respect to the housing; wherein the lifting frame comprises one or more first alignment features, said alignment features being arranged for horizontally aligning the lifting frame with a vertical column of said grid when the lifting frame is positioned below a lowermost extent of said vertical column.

## Description

### TECHNICAL FIELD

The disclosure relates to a device for handling containers. More particularly, it relates to a device for handling containers in an automated storage and retrieval system, a container handling vehicle comprising such a device, an automated storage and retrieval system comprising such a device, and a method of operating such a device.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Typically, the grid comprises a frame having a plurality of vertical columns formed between vertical frame members and extending in the X and Y directions. Storage containers are stacked on top of each other within the vertical columns in the Z direction, preferably in a self-supporting manner. The rail system is formed on top of the grid and comprises pairs of rails respectively extending in the X and Y directions upon which robotic container-handling vehicles are provided for transporting containers in the X and Y directions. The container-handling vehicles are configured to lift and lower containers out of and into the columns via access openings formed between the rails above the vertical columns, the containers typically being guided by the vertical frame members. The container-handling vehicles typically comprise a lifting device for lifting containers out of and into the grid. Such lifting operations are typically carried out as quickly as possible. Some lifting devices are arranged such that they can lift different sizes of containers. For example, a first "full-height" type of container may be stacked in a storage column. Alternatively, or in combination with the "full-height" type of container, a second "reduced-height" type of container, having a height that is less than the that of a "full-height" container may be stacked in a storage column. Problems have been encountered when lifting containers that are not of full height, however. The present application aims to overcome such problems.

### SUMMARY

One or more aspects of the present invention of the present application are set out in the appended claims. The following examples provide a summary of the disclosure of the present application.

In a first aspect of the present disclosure, there is provided a device for handling containers in an automated storage and retrieval system of the type comprising a grid having a plurality of vertical columns in which storage containers can be stacked on top of each other, between which vertical columns at least one robotic container handling vehicle is enabled to move, for retrieving storage containers by lifting them out of the vertical columns and for storing storage containers by lowering them into the vertical columns, wherein the device comprises: a housing; a lifting frame arranged for gripping a container; and means for raising and lowering the lifting frame with respect to the housing; wherein the lifting frame comprises one or more first alignment features, said alignment features being arranged for horizontally aligning the lifting frame with a vertical column of said grid when the lifting frame is positioned below a lowermost extent of said vertical column.

Optionally, said alignment features are arranged for horizontally aligning the lifting frame with one or more vertically oriented portions of the vertical column, when the lifting frame is positioned below a lowermost extent of said vertical column.

Optionally, said alignment features are arranged for horizontally aligning the lifting frame with one or more vertical frame members that define the vertical column, when the lifting frame is positioned below a lowermost extent of said vertical frame members.

Optionally, the first alignment features comprise at least one guide extending upwardly from an uppermost portion of the lifting frame. Optionally, guide comprises a rod. Optionally, an uppermost portion of each guide is tapered. Optionally, each guide is spring-loaded.

Optionally, the lifting frame comprises at least two of the first alignment features. Optionally, the at least two first alignment features are proximate to corresponding corners of the lifting frame such that in use they engage with corresponding ones of the vertical frame members that define the vertical column, and thereby align the lifting frame with the vertical column.

Optionally, the length of each guide is sufficient such that even when in use the lifting frame is lowered downwardly out of a lowermost extent of the vertical column, each at least one guide remains at least partially within the extent of the vertical column such that each at least one guide can engage with at least a corresponding portion of the vertical column.

Optionally, the device is included in a robotic container handling vehicle of an automated storage and retrieval system of the type comprising a grid having a plurality of vertical columns in which storage containers can be stacked on top of each other, wherein the robotic container handling vehicle is arranged for moving between said vertical columns, for retrieving storage containers by lifting them out of said vertical columns and for storing storage containers by lowering them into said vertical columns.

Optionally, the device is provided for handling a so-called full-height container having a height (F) that is approximately equal to the distance from rails of the grid, on which rails the robotic container handling vehicles of the automated storage and retrieval system roll, to the underside of the lifting frame when it is in the fully raised position.

Optionally, at least one of the vertical columns is arranged to enable transfer of containers between the grid which is above the vertical columns and an underlying container transport arrangement that is provided for transporting containers between a base of the at least one vertical column and a container handling port. Optionally, the device is provided for handling a so-called reduced-height container having a height (C) that is less than the height (F) of said full-height container, and wherein the first alignment features have a length (L) which is greater than a distance between a lowermost extent of the vertical column and a top of the lifting frame when the lifting frame is blocked from further downwards movement by the reduced-height container having reached its lowermost position in the grid. Optionally, the height (F) of the full-height container is approximately equal to the height (H) from the lowermost extent of the vertical column to a surface of the container transport arrangement. Optionally, a minimum length (M) of the first alignment features is defined as a height (H) from the lowermost extent of the vertical column, to a surface of the container transport arrangement, minus a sum of a height (C) of the reduced-height container and a height (F) of the lifting frame.

Optionally, the height of the reduced-height container is 220mm or 330mm, and the height of the full-height container is 450mm.

Optionally, the housing comprises one or more corresponding second alignment features in the form of apertures for receiving respective ones of the one or more first alignment features and allowing them to pass through the housing such that the lifting frame can be fully raised towards the housing without being blocked by collision of the alignment features and the housing.

Optionally, the length (L) of the first alignment features is sufficient that: when the lifting frame is being raised and at least one of the lifting frame and the container are at least partially within a particular vertical column of the grid, the first alignment features engage with the second alignment features before both of the lifting frame and the container fully exit the particular vertical column; and when the lifting frame is being lowered, at least one of the lifting frame and the container at least partially enter a particular vertical column before the first alignment features disengage from the second alignment features.

Optionally, the at least one vertical column is a port column, and the container transport arrangement is a conveyor system comprising one or more of rollers and a belt, and arranged for transporting containers between the vertical column and the port, and wherein surface of the container transport arrangement is a top surface of the conveyor system.

Optionally, the at least one vertical column is a port column, and the container transport arrangement comprises a further grid with one or more robotic container transporter vehicles operating on it for transporting containers between the vertical column and the port, and wherein the surface of the container transport arrangement is a container-supporting surface of one of said robotic container transporter vehicles which are arranged to receive a container from above.

Optionally, the lifting frame has a gripper for gripping a container, the gripper being mounted to the lifting frame. Optionally, the gripper comprises one or more selectively-engageable gripper features for controllable engagement and disengagement with corresponding features in an upper portion of a container.

In a second aspect there is provided a robotic container handling vehicle comprising the device as defined in the first aspect, the robotic container handling vehicle being for an automated storage and retrieval system comprising a grid, said grid comprising a frame having a plurality of vertical columns in which storage containers can be stacked on top of each other, said vertical columns being defined between vertical frame members of the grid, wherein at least one such robotic container handling vehicle is enabled to move across the top of the grid between the vertical columns and is arranged for retrieving storage containers by lifting them out of the vertical columns and for storing storage containers by lowering them into the vertical columns.

In a third aspect there is provided an automated storage and retrieval system comprising a grid, said grid comprising a frame having a plurality of vertical columns in which storage containers can be stacked on top of each other, said vertical columns being defined between vertical frame members of the grid, wherein at least one robotic container handling vehicle is enabled to move across the top of the grid between the vertical columns, wherein the at least one robotic container handling vehicle is arranged for retrieving storage containers by lifting them out of the vertical columns and for storing storage containers by lowering them into the vertical columns, the automated storage and retrieval system further comprising at least one device as defined in the first aspect. Optionally, at least one of the vertical columns is a port column that is arranged to enable transfer of containers between the grid which is above the vertical columns and an underlying container transport arrangement that is provided for transporting containers between a base of the port column and a container handling port.

In a fourth aspect there is provided a method of operating a device as defined in the first aspect, in an automated storage and retrieval system of the type comprising a grid having a plurality of vertical columns in which storage containers can be stacked on top of each other, between which vertical columns at least one robotic container handling vehicle is enabled to move, for retrieving storage containers by lifting them out of the vertical columns and for storing storage containers by lowering them into the vertical columns, wherein the device is included in one or more of said at least one robotic container handling vehicles, the method comprising the steps of: lowering the lifting frame in a vertical column of said plurality of vertical columns, to a position below a lowermost extent of the vertical column, whereupon the one or more first alignment features of the lifting frame aid horizontal alignment of the lifting frame with respect to the vertical column; and raising the lifting frame in the vertical column, whereupon the one or more first alignment features of the lifting frame aid horizontal alignment of the lifting frame with respect to the vertical column.

Optionally, the method further comprises: raising the lifting frame further upwards in the vertical column towards the housing, whereupon the one or more first alignment features of the lifting frame engage with corresponding ones of second alignment features of the housing before both of the lifting frame and container fully exit the top of the vertical column, thereby aiding horizontal alignment of the lifting frame with respect to the housing. Optionally, said lifting frame is engaged with a reduced-height container which has a height (C) that is less than a height (F) of a full-height container, wherein the height (F) of a full-height container is approximately equal to a distance from rails of the grid on which the robotic container handling vehicle rolls, to the underside of the lifting frame when in the fully raised position. Optionally, the vertical column is a port column that is arranged to enable transfer of containers between the grid which is above the vertical columns and an underlying container transport arrangement that is provided for transporting containers between a base of the port column and a container handling port.

In a further aspect, the device of the first aspect may be a device for handling containers in an automated storage and retrieval system of the type comprising a grid, said grid comprising a frame having a plurality of vertical columns in which storage containers can be stacked on top of each other, said vertical columns being defined between vertical frame members of the grid, wherein at least one robotic container handling vehicle is enabled to move across the top of the grid between the vertical columns, wherein the at least one robotic container handling vehicle is arranged for retrieving storage containers by lifting them out of the vertical columns and for storing storage containers by lowering them into the vertical columns, and wherein the grid further comprises at least one port column that is arranged to communicate with an underlying container transport arrangement for transporting containers between a base of the port column and a container handling port.

Additional variations will be apparent to the skilled reader from the detailed description below.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle (or "robot") suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 3D is a perspective side view of the robot of Fig. 3A;
Fig. 3E is a side view of the robot of Fig. 3A, with its lifting frame in a fully raised position;
Fig. 3F is a side view of the robot of Fig. 3A, with its lifting frame in a partially lowered position;
Fig. 4 shows a computing device for implementing the operations described herein;
Fig. 5 is a perspective view of a portion of the system of Fig. 1, comprising a port and a container transport arrangement, in this example a conveyor system, for conveying containers from a port column to the port.
Fig. 6 is a side view of a portion of the system of Fig. 1, comprising a port and a container transport arrangement, in this example a conveyor system, for conveying containers from a port column to the port.
Fig. 7A is a side view of a vertical column (e.g. a port column, or other vertical column), showing a robot having a conventional lifting frame in the act of lowering or raising a full-height container near the bottom of a vertical column.
Fig. 7B is a side view of a vertical column (e.g. a port column, or other vertical column), showing a robot having a conventional lifting frame connected to a full-height container that has been lowered to and/or is about to be lifted from the bottom of a vertical column.
Fig. 8 is a side view of a vertical column (e.g. a port column, or other vertical column), showing a robot having a conventional lifting frame connected to a reduced-height container that has been lowered to and/or is about to be lifted from the bottom of a vertical column.
Fig. 9A is a side view of a robot having a lifting device according to the present disclosure, in which the lifting frame is provided with at least one first alignment feature, in this example at least one vertically extending guide, for aligning the lifting frame in the vertical column (e.g. port column, or other vertical column) when a reduced-height container has been lowered to and/or is about to be lifted from the bottom of a vertical column, wherein the lifting frame is in a fully raised position with respect to the body of the robot.
Fig. 9B is a side view of a robot having a lifting device according to the present disclosure, wherein the lifting frame is in a partially lowered position with respect to the body of the robot.
Fig. 10A is a side view of a vertical column (e.g. a port column, or other vertical column), showing a robot having a lifting device according to the present disclosure, in the act of lowering or raising a reduced-height container near the bottom of a vertical column.
Fig. 10B is a side view of a vertical column (e.g. a port column, or other vertical column), showing a robot having a lifting device according to the present disclosure, wherein its lifting frame is connected to a reduced-height container that has been lowered to and/or is about to be lifted from the bottom of a vertical column, showing the at least one first alignment feature (e.g. at least one vertically extending guide) remaining engaged with an interior surface of the vertical column, thereby horizontally aligning the lifting frame with the vertical column.
Fig. 11 is a process flow diagram illustrating steps of a method of using a robot as shown in any of Figs. 9A to 10B in a system as illustrated in Fig. 1.

### DETAILED DESCRIPTION

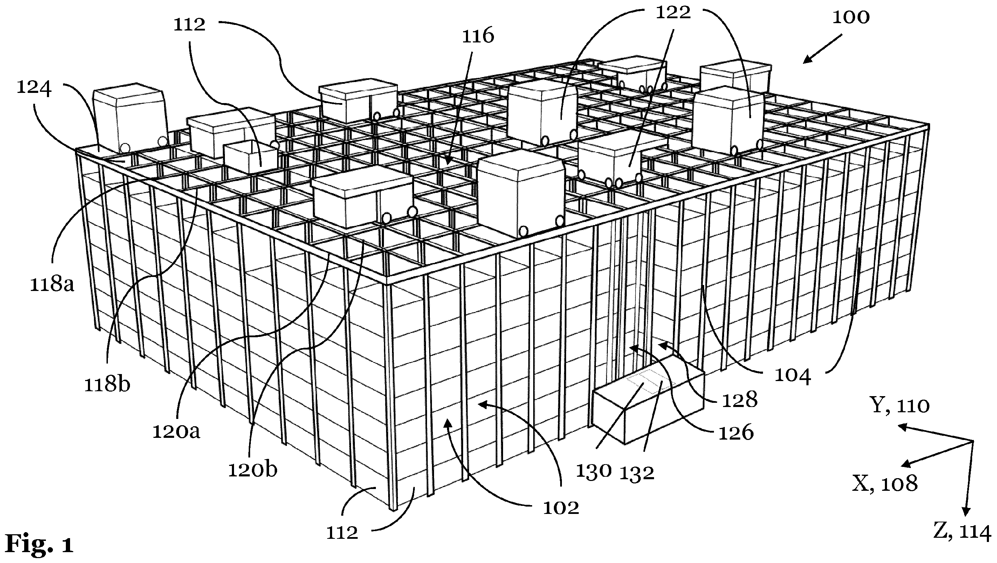

In overview, the disclosure relates to a device for handling containers in an automated storage and retrieval system of the type comprising a grid, as described below with reference to Fig. 1. Such automated storage and retrieval systems typically have a number of robotic container handling vehicles operating on the top of the grid, able to move on the grid between the plurality of vertical columns of the grid, and provided for lowering containers into, and for raising containers out of, the vertical columns in each of which a plurality of containers can be stacked on top of each other. Each device (e.g. a container-handling vehicle) typically has a housing, a lifting frame arranged for gripping a container (e.g. by use of clamps and/or positively engageable pegs, or other suitable means), and means (e.g. motorised winding roller(s) and lifting bands/wires) for raising and lowering the lifting frame with respect to the housing. The device described herein constitutes an improvement to said lifting frame, as will be further explained, and can be integrated into one or more of said container handling vehicles, for enhancing said lowering and raising of containers.

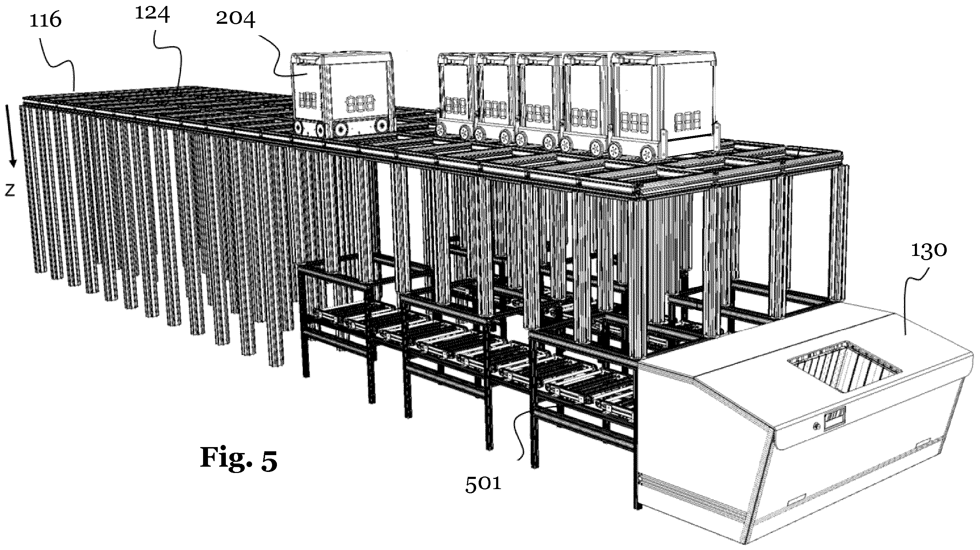

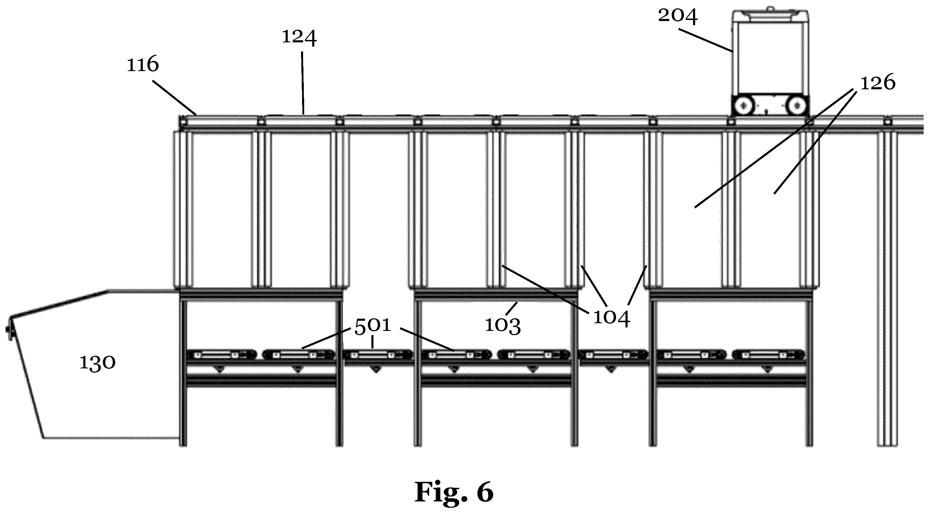

Said automated storage and retrieval systems also typically have at least one "port column" 126, 128 which is a column in which containers are not stored but instead which provides a vertical passage from the top of the grid 100 to a lower level where container transport means 501 is provided (such as a conveyor system shown in Figs. 5 and 6, e.g. having rollers and/or one or more belts) for transporting containers from the port column 126, 128 to a "port" 130 at which the contents of containers can be accessed e.g. by a human operator or by a robot. Said robotic container handling vehicles 122, 202, 204 can lower particular containers down the port column 126, 128 towards the container transport means 501 at the bottom of the port column 126, 128.

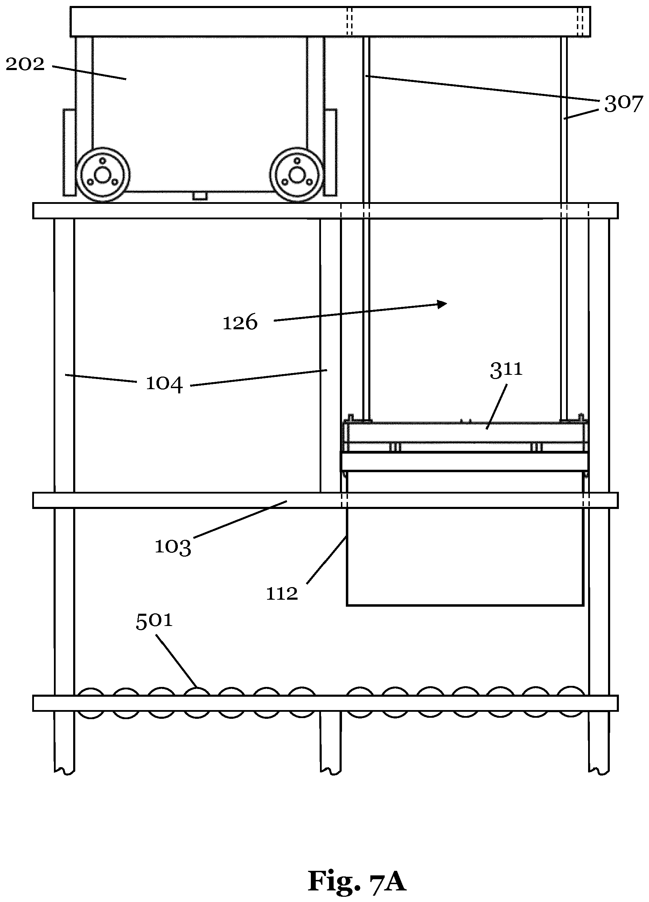

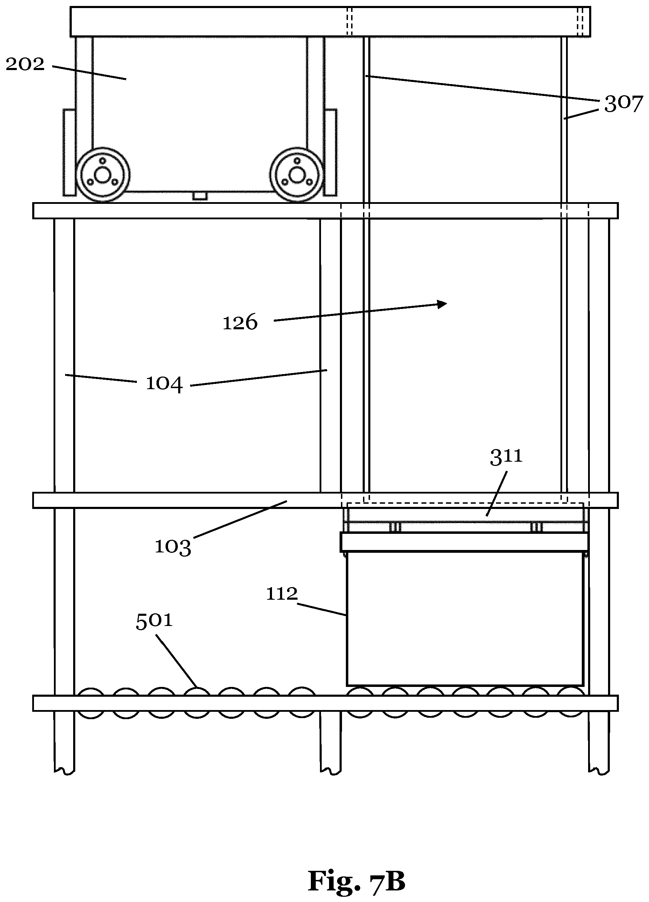

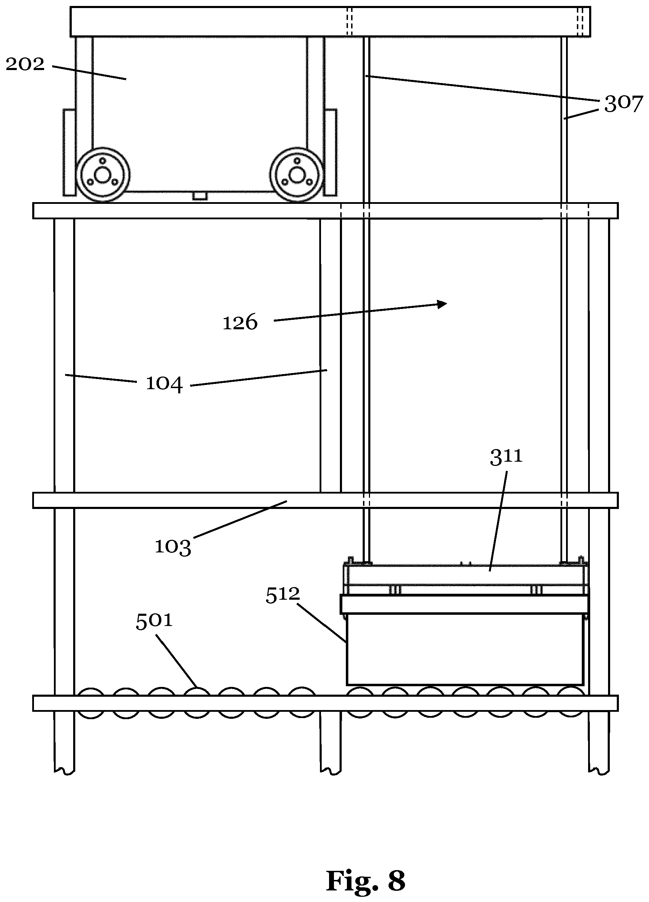

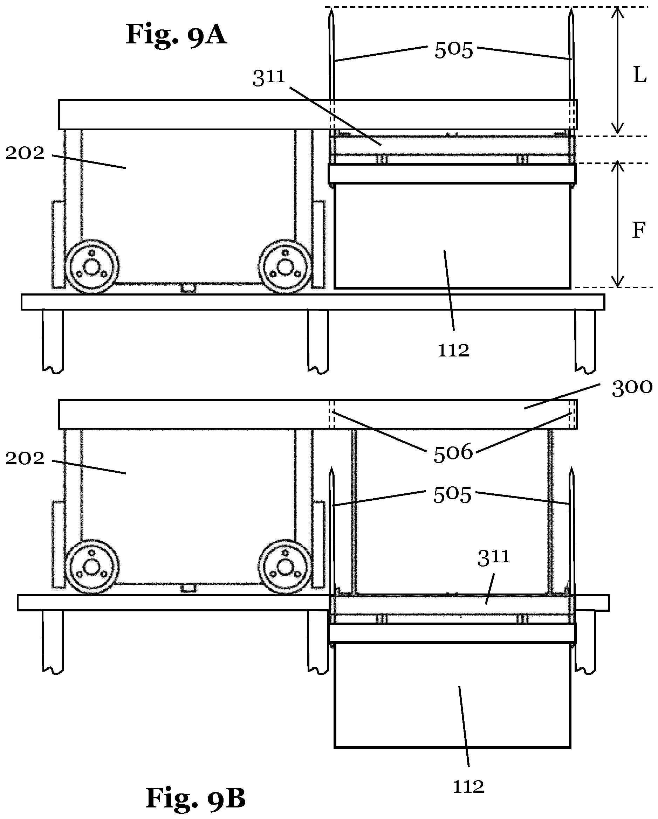

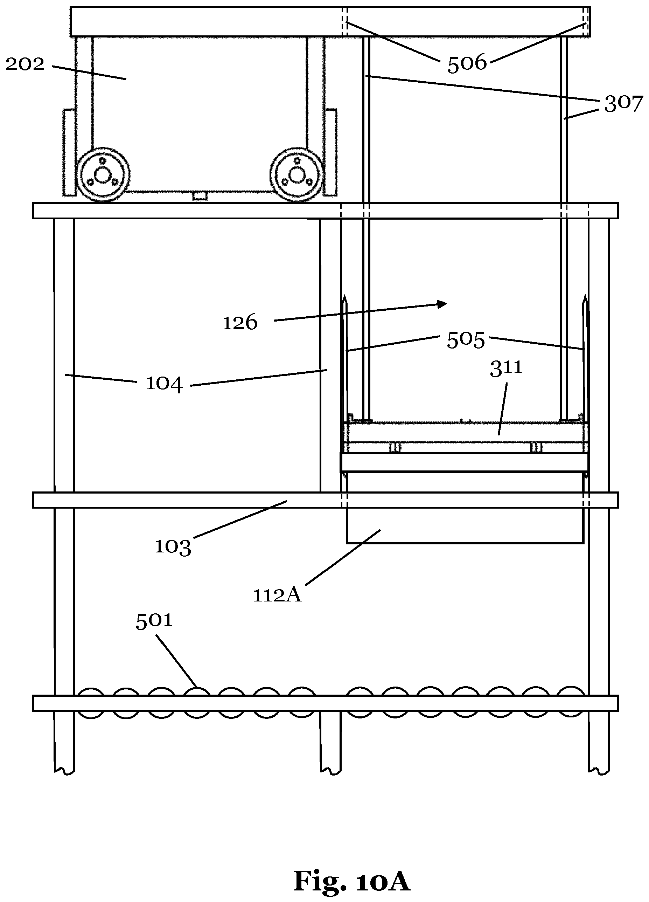

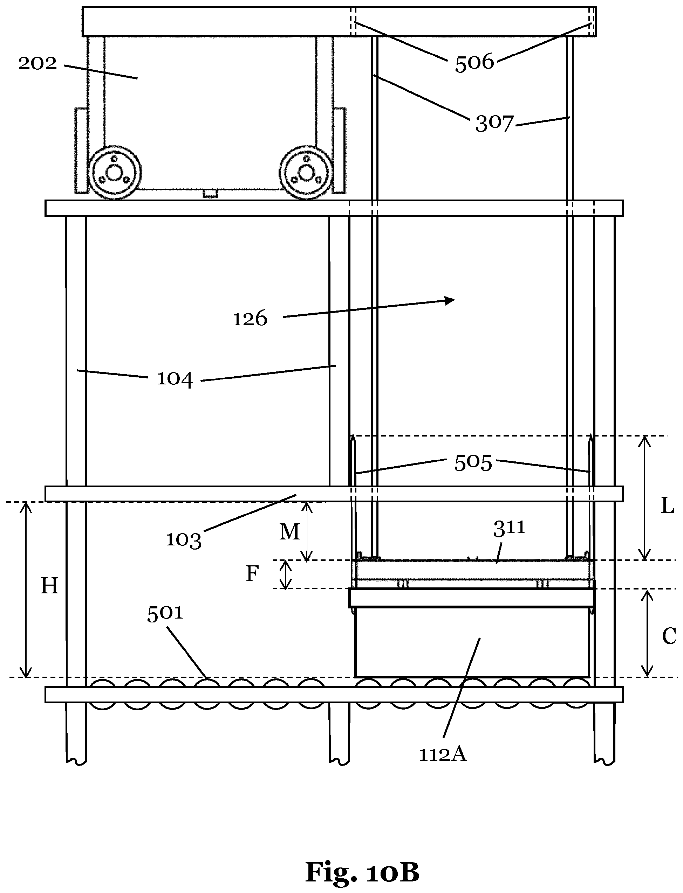

A full-height container 112, as shown in Figs. 7A and 7B, typically has a height F (as later shown in Fig. 9A) that is just able to be accommodated within the height of a cavity or space 310 provided in a container-handling vehicle, which is for accommodating a container 112 when it is being transported by the container-handling vehicle 122, 202, 204. In other words, the height of a full-height container 112 is approximately equal to the distance between the underside of a lifting frame 311 of the container-handling vehicle (the lifting frame 311 is provided in the vehicle 122, 202, 204 for lifting containers vertically upwards into or downwards out of the cavity 310) and the top of the grid 100 on which the container-handling vehicle 122, 202, 204 is arranged to move. Similarly, the lowermost extent of the port column 126, 128 opens downwardly into a space above the container transport means (e.g. conveyor belt) 501, and the height H (as later shown in Fig. 10B) between (i) the lowermost extent of the port column 126, 128 (e.g. a lowermost extent of vertical frame members 104 that define the corners of the port column 126, 128) and (ii) the top of the container transport means (e.g. conveyor belt) 501, is typically also approximately equal to the height F of a full-height container 112. Other vertical columns 102, not only port columns 126, 128, can be similarly arranged. As shown in Figs. 8 and 10A to 10B, a reduced-height container 112A has a height C that is less than the height F of a full-height container 112, for example, two thirds, or half, or a third of the height F of a full-height container 112. By way of non-limiting example, a full-height container 112 can have a height F of 450mm, whereas a reduced-height container 112A can have a height C of 220mm or 330mm, however it will be appreciated that any other suitable heights can be used, as appropriate for providing any particular container area and volume that may be desired.

When a container-handling vehicle 122, 202, 204 lowers a container 112, 112A down to the bottom of a port column 126, 128, with the lifting frame 311 of the container-handling vehicle 122, 202, 204 attached to the top of the container 112, 112A, the container finally contacts the container transport means 501 (e.g. conveyor belt, or container transport trolley) and is then unable to move any further downwards. In the case of a full-height container 112, due to a full-height container 112 being substantially the same height F as the distance H between the top of the container transport means 501 and the lowermost extent of the port column 126 (e.g. a lowermost extent of vertical members 104 defining the port column 126), the lifting frame 311 (which is attached to the top of the container 112) is prevented from moving further downwardly and out of the port column 126, because the top of the full-height container 112 is close to the lowermost extent of the vertical frame members 104 that define the port column 126. However, a problem has been found to exist when reduced-height containers 112A are used, in that due to the reduced height of such containers 112A, the lifting frame 311 is able to move downwardly in the port column 126 to an extent where it may completely exit the lowermost extent of the port column 126, and thus no longer be horizontally constrained by and aligned with the port column 126. This can cause inaccurate placement of containers 112A on the container transport means 501 and/or can cause jamming when the container-handling vehicle 122, 202, 204 attempts to raise the lifting frame 311 back upwards into the port column 126. A similar situation can exist not only with port columns 126, 128, but also with other vertical columns 102 that open at their lowermost extent into a space into which containers 112, 112A can be lowered. For example, some vertical columns 102 may be provided in such automated storage and retrieval systems to provide a vertical passage from the top of the grid 100 to a lower level where another grid may be provided, wherein that other grid may have its own robotic container handling vehicles operating. Thus, the present disclosure applies to any other vertical column 102 that opens at its lower extent to a space, into which a lifting frame 311 may be lowered and potentially left unconstrained in horizontal dimensions with respect to the vertical column 102.

To overcome the above-mentioned problem, as shown in Figs. 9A to 10B, the lifting frame 311 of the disclosed device comprises one or more first alignment features 505, said alignment features 505 being arranged for at least partially aiding horizontal alignment of the lifting frame 311 with one or more of the vertical frame members 104 that define the port column 126 (or other vertical column 102 as mentioned in the paragraph above) or with one or more vertically oriented portions of the vertical column 102, when the lifting frame 311 is positioned below a lowermost extent of those vertical frame members 104.

For example, the first alignment features 505 can comprise at least one guide extending upwardly from an uppermost portion of the lifting frame 311, wherein optionally each guide 505 comprises a rod, and further optionally an uppermost portion of each guide 505 is tapered. Optionally, each guide can be spring-loaded such that the guide can collapse, e.g. telescope, such that its length is able to reduce when the guide is pressed upon in its extending direction, e.g. when the lifting frame returns upwards towards the housing of the device. In general, the length of such upwardly extending guides 505 is sufficient that even when the lifting frame 311 is lowered downwardly out of a lowermost extent of a vertical column 102 (e.g. port column 126), which as explained above can happen when lowering a reduced-height container 112A, the at least one upwardly extending guide 505 remains at least partially within the extent of the vertical column 102, such that each at least one guide 505 remains able to engage with at least a corresponding portion of the vertical column 102, and thereby aids (at least to some extent) horizontal alignment of the lifting frame 311 with respect to the vertical column 102.

By way of further example, the lifting frame 311 can comprise at least two of the first alignment features 505, e.g. each one proximate to a corresponding corner of the lifting frame 311 such that in use each first alignment feature 505 engages with a corresponding one of the vertical frame members 104 that define the vertical column 102 (e.g. port column 126), and thereby aid (at least to some extent) horizontal alignment of the lifting frame 311 with respect to the port column 126. In illustrated examples, four upwardly projecting guides 505 are shown, but it will be appreciated that some of those guides 505 may be omitted while still providing sufficient horizontal alignment, or at least improved horizontal alignment compared to conventional devices that lack such guides 505. Many different placements and arrangements of differing numbers of the first alignment features 505 on the lifting frame 311 can be envisaged within the scope of the present disclosure, with generally at least two first alignment features 505 being located generally distant from each other within the footprint of the lifting frame 311 and proximate to a corner of edge of the lifting frame 311 such that they are able to engage with a vertical frame member 104 of a vertical column 102 (e.g. port column 126) so as to provide alignment of the lifting frame with the vertical column 102.

### Automated storage and retrieval system overview

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

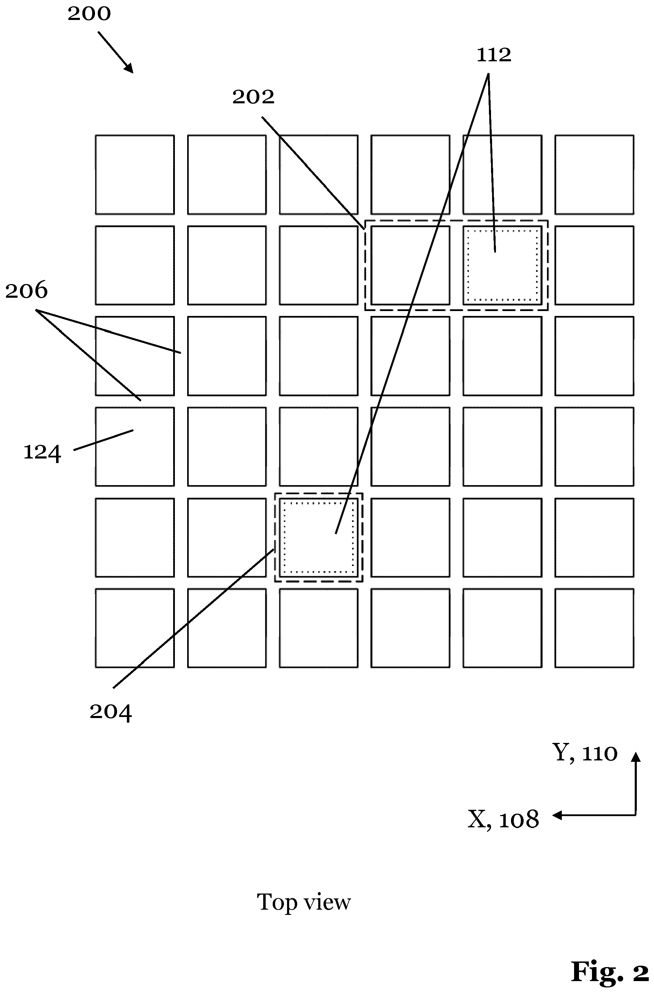

Referring to the embodiment shown in Fig. 2, the X-Y configuration 200 of the rail system 116 can be seen in more detail, together with robots 122, 202, 204 of different types. The rail system includes rails 206 defining between them vertical column access openings 124 for access to bins 112. The rails 206 can be any appropriate type for permitting travel of the robots 122, 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

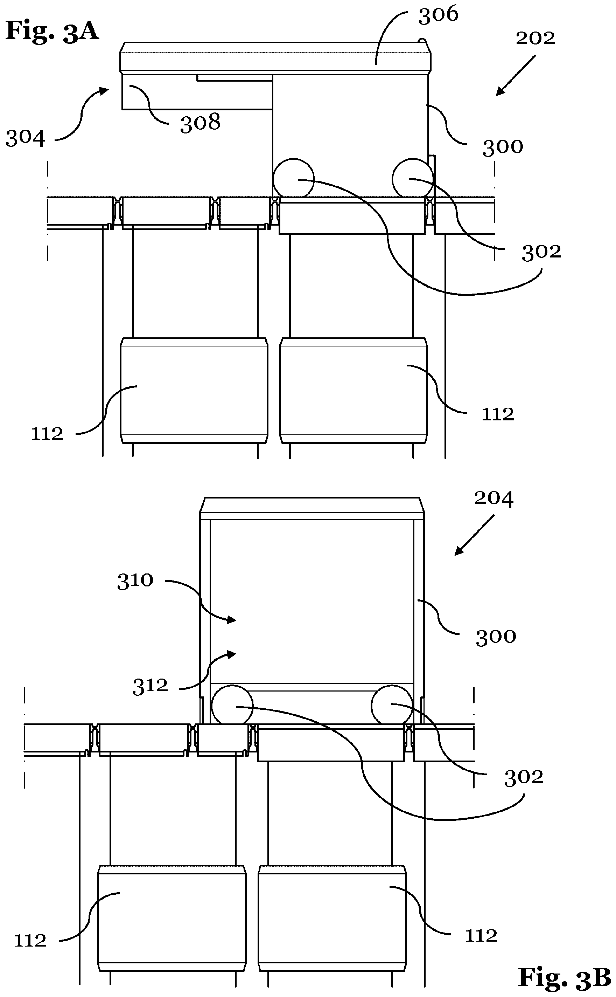

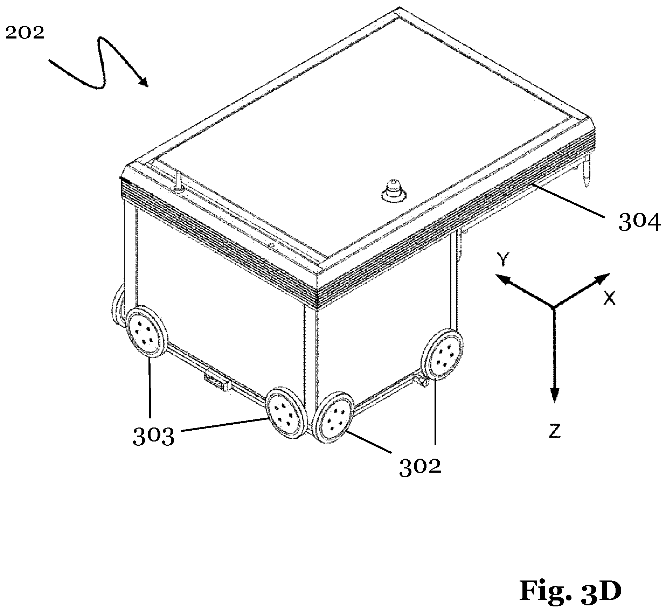

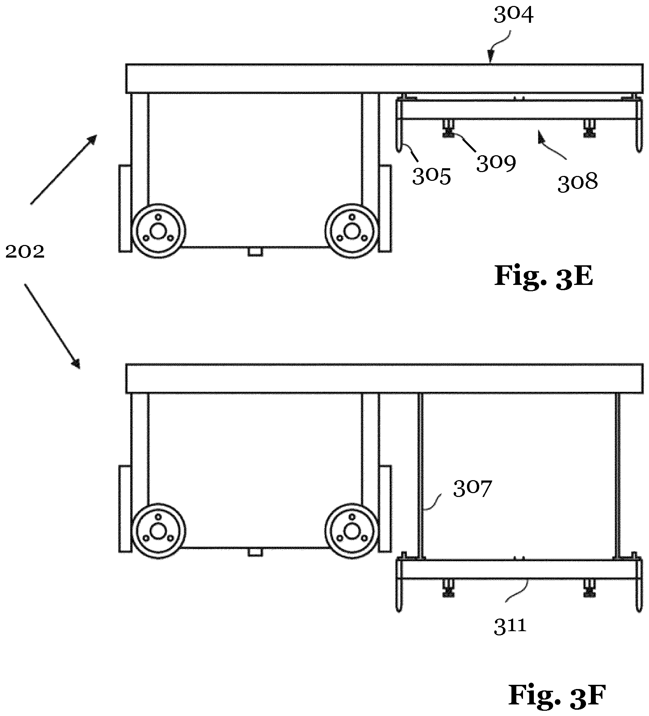

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

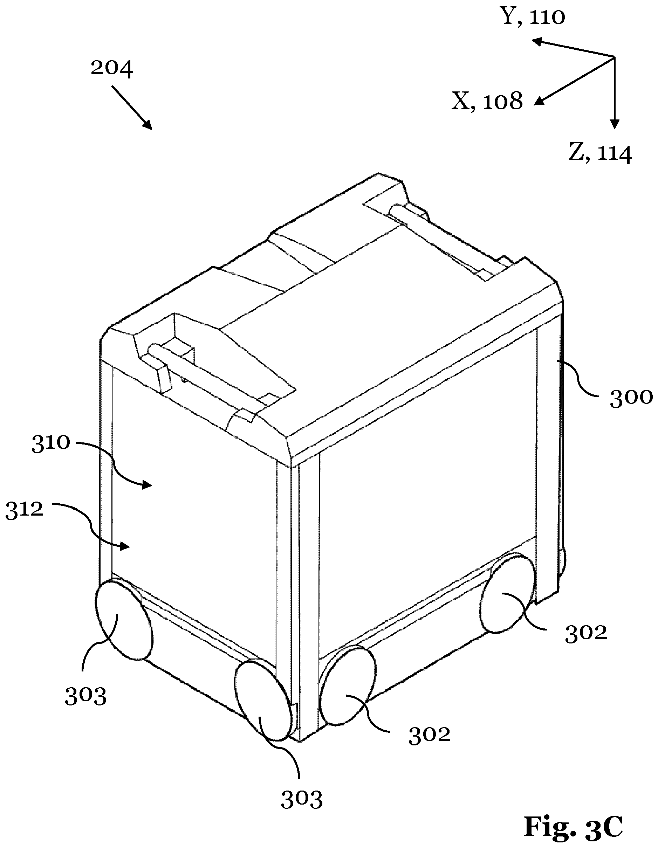

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

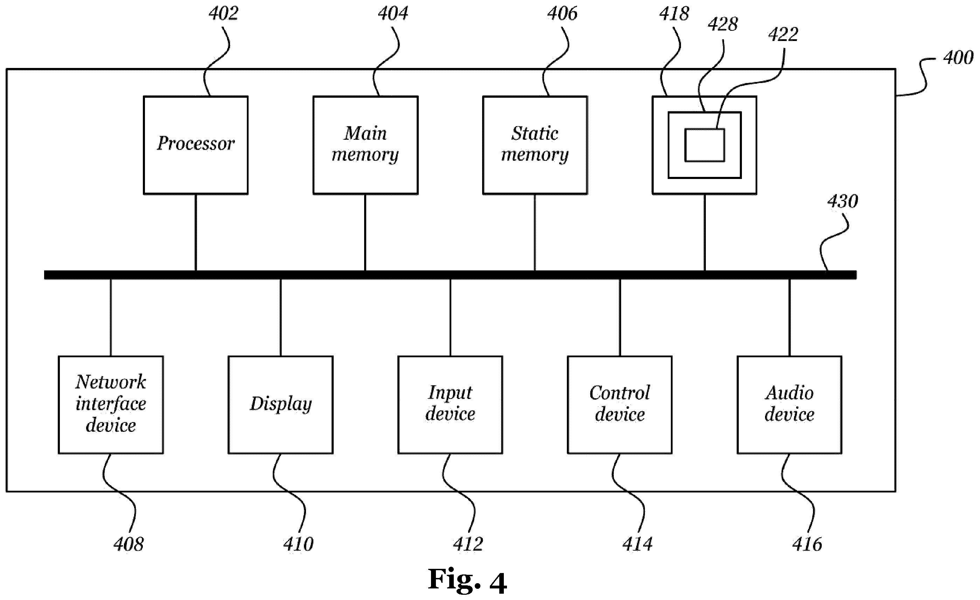

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 122, 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 122, 202, 204. The robot 122, 202, 204 lowers the gripping device 308 which engages, grips and lifts the bin 112 to the robot 122, 202, 204. The robot 122, 202, 204 then transports the bin 112, for example, to the drop-off port column 126, 128 for delivery to the port 130, 132 and subsequent processing external to the grid 100. In the event that the target or designated bin 112 is below other bins in the stack then the robot 122, 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 122, 202, 204 and delivered to the desired storage cell, bins above the desired position being repositioned if necessary as discussed above.

### Description of specific improvements

As outlined in general above with reference to Figs. 9A to 10B, an aspect of the present disclosure is provided in the form of a device for handling containers 112 in an automated storage and retrieval system 10.

As shown in Fig. 1, said automated storage and retrieval system 10 is of the type comprising a grid 100, said grid 100 comprising a frame having a plurality of vertical columns 102 in which storage containers (otherwise termed "bins") 112 can be stacked on top of each other, said vertical columns 102 being defined between vertical frame members 104 of the grid 100. In such an automated storage and retrieval system 10, at least one robotic container handling vehicle 122, 202, 204 is typically enabled to move across the top of the grid 100 between the vertical columns 102, wherein the at least one robotic container handling vehicle 122, 202, 204 is arranged for retrieving storage containers 112 by lifting them out of the vertical columns 102, and is also arranged for storing storage containers 112 by lowering them into the vertical columns 102. In such an automated storage and retrieval system 10, the grid 100 further comprises at least one port column 126, 128 that is arranged to communicate with an underlying container transport arrangement 501 (as shown in Figs. 5-8 and 10A-10B) for transporting containers between a base of the port column 126, 128 and a container handling port 130, and/or the grid 100 further comprises at least one other vertical column 102 that provides a vertical passage from the top of the grid 100 to a lower level where another grid may be provided with its own robotic container handling vehicles operating. Such a port column 126, 128 or other vertical column 102 opens at its lower extent into a respective space, into which a lifting frame 311 may be lowered and potentially left unconstrained in horizontal dimensions with respect to that port column 126, 128 or that vertical column 102.

Regarding the disclosed device, more specifically with reference to Figs. 3C to 3F and 7A to 10B, the device comprises a housing 300 (e.g. the housing 300 of the device can be the body of a robotic container handling vehicle 122, 202, 204, or can be a separate element arranged for or suitable for integration into said body), and a lifting frame 311 arranged for gripping a container 112. Typically, but optionally, means (e.g. one or more motorised rollers attached to the housing 300 and arranged for winding one or more lifting bands 307 or cables, chains, or other suitable windable means that are connected to the lifting frame 311) are provided for raising and lowering the lifting frame 311 with respect to the housing 300.

In an improvement to previous devices, as shown in Figs. 9A to 10B, the lifting frame 311 of the device of the present application comprises one or more first alignment features 505, said alignment features 505 being arranged for aiding horizontal alignment of the lifting frame 311 with respect to a vertical column 102 (e.g. port column 126, 128) of the grid 100, for example for horizontally aligning the lifting frame 311 with one or more of the vertical frame members 104 that define the vertical column 102 (e.g. port column 126, 128), said aiding being provided even when the lifting frame 311 is located below a lowermost extent of the vertical column 102.

It will be appreciated that, looking downwards into a vertical column 102 (e.g. port column 126, 128), the vertical column will typically have, at each of its corners, a vertical frame member 104. Said vertical frame members 104 of a particular vertical column 102 typically run continuously (even if constructed from multiple sections that are joined together) from a lowermost extent of the vertical column 102 upwards to the top of the grid 100, such that the alignment features 505 of the lifting frame 311 can respectively engage with a surface of each of or a subset of the vertical frame members 104, to thereby provide at least some horizontal alignment of the lifting frame 311 with the vertical column (e.g. port column 126, 128) throughout an operation of lowering and/or raising the lifting frame 311. This alignment is provided, at least when the lifting frame 311 is positioned below a lowermost extent of those vertical frame members 104, as shown in Fig. 10B, however the alignment features 505 may also provide alignment of the lifting frame 311 with the vertical column 102 in other situations, e.g. while the lifting frame is part-way up a vertical column 102 such as port column 126, 128, and/or when the lifting frame 311 is almost fully raised into the housing 300. The means by which this alignment is achieved will be further described below. It is noted that when the lifting frame 311 is fully raised into the housing (e.g. the body of one of the robotic container handling vehicles 122, 202, 204), no alignment of the lifting frame 311 with the vertical column 102 is provided, since in that condition the lifting frame and any container 112 that may be attached to the lifting frame 311 must be clear of the grid 100 such that the robotic container handling vehicle 122, 202, 204 is free to move across the grid between storage columns 102.

As noted above and shown in Figs. 9A to 10B, the lifting frame 311 of the disclosed device comprises one or more first alignment features 505, said alignment features 505 being arranged for aiding horizontal alignment of the lifting frame 311 with one or more of the vertical frame members 104 that define a vertical column 102 (e.g. port column 126) when the lifting frame 311 is positioned below a lowermost extent of the vertical column 102 (e.g. below a lowermost extent of those vertical frame members 104). Such alignment of the lifting frame 311 with the vertical column 102 when the lifting frame 311 is positioned below a lowermost extent of the vertical column 102, as shown in Fig. 10B, can for example be provided by the first alignment features 505 comprising at least one guide that extends upwardly from an uppermost portion of the lifting frame 311. For example, an upwardly extending guide 505, such as a rod, can be mounted to or through a top surface of the lifting frame 311, e.g. to one or more corners of the lifting frame 311. In an example, an upwardly extending guide 505 can be provided at two or more corners of the lifting frame 311 so as to engage with corresponding ones of the vertical frame members 104 of the vertical column 102 (e.g. port column 126, 128). In another example, the vertical column 102 can additionally comprise one or more vertically oriented portions (e.g. guides, or "skids" or tracks) other than the vertical frame members 104, on which corresponding ones of the first alignment features 505 can bear so as to provide horizontal alignment of the lifting frame 311 with the vertical column 102, in which case the first alignment features 505 are suitably arranged so as to engage with such vertically oriented portions.

Optionally, an uppermost portion of each guide 505 can be tapered, or shaped in another suitable way such that as the lifting frame 311 is raised from a fully lowered position in the vertical column 102 (e.g. port column 126, 128), a clearance between each guide 505 and its respective vertical frame member 104 (or vertically oriented portion of the vertical column 102) with which said guide engages, in a horizontal direction from said vertical frame member 104 (or vertically oriented portion of the vertical column 102) to a central axis of the vertical column 102, reduces as the lifting frame 311 is raised into the vertical column 102. This provides a relatively large horizontal alignment tolerance when the lifting frame 311 is fully lowered, which tolerance reduces as the lifting frame 311 is raised into the vertical column 102, so that any initial horizontal misalignment of the lifting frame 311 with the vertical column 102 is progressively reduced as the lifting frame 311 is raised into the vertical column 102, which helps to avoid jamming or imparting excessive mechanical shock to the container and/or lifting mechanism and/or container contents, thereby extending operational life and reducing damage/wear. Additionally, due to the aiding of horizontal alignment of the lifting frame 311 with respect to the vertical column 102 (e.g. port column 126, 128) that is provided by the first alignment features 505, the lifting frame 311 can be raised more quickly, thereby reducing the time required for container transport, and improving the operating efficiency and capacity of the automated storage and retrieval system 10.

As shown in Fig. 10B, the length L of such upwardly extending guides 505 is preferably sufficient such that even when the lifting frame 311 is lowered downwardly out of a lowermost extent of a vertical column, e.g. port column 126, 128 (which can happen when lowering a reduced-height container 112A), at least one of the upwardly extending guides 505 remains at least partially within the extent of the vertical column 102, such that the (or each) at least one guide 505 remains able to engage with at least a corresponding portion (e.g. vertical frame member 104, or vertically aligned portion) of the vertical column 102, and thereby provide at least some horizontal alignment of the lifting frame 311 with the vertical column 102.

Thus an improved device is provided for handling reduced-height containers 112A which have a height C that is less than a height F of a full-height container 112, at least partially by virtue of the first alignment features (e.g. upwardly extending guides) 505 having a length L that is greater than a distance between a lowermost extent of the vertical column 102 (e.g. a lowermost extent of vertical frame members 104 that define the vertical column 102 such as port column 126, 128) and a top of the lifting frame 311 at its lowest position when handling a reduced-height container 112A. For example, the guides 505 can be of a length L that is approximately equal to the height F of a full-height container 112. By way of further example, a minimum length M of the first alignment features 505 can be defined as a height H from the lowermost extent of the vertical column (e.g. the lowermost extent of vertical frame members 104 that define the vertical column 102 such as port column 126, 128), to an uppermost surface of the container transport arrangement 501, minus a sum of a height C of the reduced-height container 112A and a height F of the lifting frame 311.

Typically, a so-called full-height container has a height F that is approximately equal to the distance from the rails (upon which the container-handling vehicles can roll) of the grid 100 to the underside of the lifting frame 311 when it is in the fully raised position in the housing 300 of a robotic container handling vehicle 122, 202, 204 - this is because the container handling vehicles 122, 202, 204 are typically designed so as to be just tall enough to carry a full-height container 112 above the grid 100 without clashing of the container 112 with the rails of the grid 100, however this should not be taken to be a limitation of the present disclosure. Typically, the height F is also or alternatively approximately equal to the height H from the lowermost extent of the vertical column 102 (e.g. the lowermost extent of vertical frame members 104 that define the vertical column 102 such as port column 126, 128), to a surface of the container transport arrangement 501. This is because the space provided above the container transport arrangement 501 is typically only as high as is needed to accommodate full-height containers 112, however it should not be taken that this is a limitation of the present disclosure. By way of non-limiting example, a height of a reduced-height container 112A can be 220mm or 330mm, and a height of a full-height container 112 can be 450mm. Container heights can be determined according to the volume of storage space required inside containers 112, 112A, according to the density of container contents and/or the strength of the material from which containers are made.

By way of non-limiting example, the lifting frame 311 can comprise at least one, and preferably at least two of the first alignment features 505, e.g. each one proximate to a corresponding corner of the lifting frame 311 such that in use each first alignment feature 505 can engage with a corresponding one of the vertical frame members 104 that define the vertical column 102 (e.g. port column 126) or with a corresponding one of vertically aligned portions of the vertical column 102, and thereby aid horizontal alignment of the lifting frame 311 with the vertical column (e.g. port column 126, 128). In illustrated examples, four upwardly projecting guides 505 are shown, but it will be appreciated that some of those guides 505 may be omitted while still providing sufficient horizontal alignment, or at least improved horizontal alignment compared to conventional devices that lack such guides 505. For example, a single guide 505 may provide at least some horizontal alignment against misalignment in a direction which would entail moving the guide 505 against its respective vertical frame member 104 or vertically aligned portion. By way of further example, at least two guides, e.g. a pair of guides 505 at opposing corners of the lifting frame 311, would provide horizontal alignment in both X and Y directions, and would also aid rotational alignment. Other embodiments with 3 or 4 guides will be envisaged in the light of this disclosure, e.g. a guide 505 at each corner, or 3 guides with 2 of them at neighbouring corners and the third guide at or between the two remaining corners. One or more vertically aligned portions (e.g. additional vertical guides, skids or rails) can additionally be provided within the vertical column 102 (e.g. port column 126, 128) for engagement with such guides 505 when they are positioned between two corners.

Optionally, as shown in Figs. 9A and 9B, the housing 300 of the device (e.g. the body of a robotic container handling vehicle 112, 202, 204 in which the present device may be installed) can comprise one or more corresponding second alignment features 506 e.g. in the form of apertures that are arranged (e.g. correspondingly positioned and/or sized) for receiving respective ones of the one or more first alignment features 505 and allowing the first alignment features 505 to pass through the housing 300 such that the lifting frame 311 can be fully raised towards the housing 300 without being blocked by collision of the first alignment features 505 and the housing 300. This provides for a more compact arrangement, e.g. by not requiring a top of the housing 300 to be raised further from the grid 100 so as to accommodate the first alignment features 505 that stand upwardly from the lifting frame 311. Optionally instead of or in addition to the second alignment features, one or more of the guides can be spring-loaded such that the respective guide can collapse, e.g. telescope, such that its length is able to reduce when the respective guide is pressed upon in its extending direction, e.g. if the end of the guide contacts the housing when the lifting frame 311 returns upwards towards the housing of the device.

Optionally, the engagement of the first alignment features 505 with the second alignment features 506 can provide an additional advantage, as will be described. In a particular implementation, the length (L) of the first alignment features 505 is sufficient that: when the lifting frame 311 is being raised and at least one of the lifting frame 311 and the container 112 are at least partially within a vertical column 102 (e.g. port column 126, 128) of the grid 100, the first alignment features 505 engage with (or are received by) the second alignment features 506 before both of the lifting frame 311 and the container 112 fully exit the vertical column 102. Similarly, when the lifting frame 311 is being lowered, at least one of the lifting frame 311 and the container 112, 112A at least partially enter the vertical column 102 before the first alignment features 505 fully disengage from (or exit from) the second alignment features 506. This provides that, at any particular time during a container lowering or lifting operation: either the lifting frame 311 and the attached container 112 are (at least partially) aligned with the vertical column 102, 126, 128 by virtue of contact between the container 112 and/or lifting frame 311 with an interior of the vertical column 102; or the lifting frame 311 and attached container 112 are (at least partially) aligned with the housing 300 by virtue of engagement between the first alignment features 505 and the second alignment features 506 (the housing 300 typically being aligned with the vertical column 102 by virtue of control of the position of the robotic container handling vehicle 122, 202, 204 in which the housing 300 is installed); and thus at no point is the lifting frame 311 left without at least some positive horizontal alignment provided with respect to the vertical column 102 (e.g. port column 126, 128). To achieve this, by way of non-limiting example the length L of the first alignment features 505 can be approximately equal to the height F of a full-height container 112, although greater lengths can also provide the described advantage albeit while increasing the distance by which the first alignment features 505 protrude from a top of the housing 300.

In some examples, the lifting frame 311 preferably has a gripper 309 (such as one or more elongated rotatable pegs, or clamps, or other such selectively-engageable gripper feature suitable for gripping a container 112, preferably by attaching to the container's upper perimeter) mounted to the lifting frame 311. For example, at least two of such pegs or clamps, preferably at opposing sides of the lifting frame 311, can be provided to assist with secure and releasable gripping of a container 112 by the lifting frame 311, e.g. by selectable engagement of such gripper features with corresponding or cooperating features of a container's upper portion. A single gripper feature can be used if care is taken to balance the load of the container on the gripper feature, but use of more than one gripper feature permits them to be distributed around the perimeter of the container rim for balanced sharing of weight and improved access to container contents.

Such a device as described above can be included in a robotic container handling vehicle 122, 202, 204 of an automated storage and retrieval system 10. Such an automated storage and retrieval system 10 can be provided, including such a robotic container handling vehicle 122, 202, 204, of a type including the device described herein. Such an automated container handling system 10 can include a port column 126, 128 as described above (and/or other vertical column 102 that is open at its lowermost extent to provide a path from the grid 100 to an underlying other grid or container transport arrangement), and can include the container transport arrangement 501 described above and arranged for transporting containers between said port column 126, 128 and the port 130. Said container transport arrangement can for example be a conveyor system comprising one or more of rollers and a belt, in which the mentioned surface of the container transport arrangement 501 is a top surface of the conveyor system. Additionally or alternatively, the container transport arrangement for transporting containers between the port column 126, 128 (or other vertical column 102) and the port 130 can comprise another grid (similar to and arranged underneath the grid described above) with one or more further robotic container transporter vehicles associated with it and operating on it, in which case the surface of the container transport arrangement can be considered to be a container-supporting surface of one of said further robotic container transporter vehicles which are arranged to receive a container 112 from above them. For example, one of the further robotic container transporter vehicles (e.g. a trolley vehicle) can be arranged and/or controlled to be positioned underneath a vertical column 102 and receive a container 112, 112A from the vertical column 102 above that further robotic container transporter vehicle. Having received the container 112, 112A onto a surface of the further robotic container transporter vehicle, said further robotic container transporter vehicle can be controlled such that it transports the container 112, 112A to the port 130 or to another destination in the other grid. Similarly, the container transport arrangement 501 can transport containers 112 from the port 130 to a position underneath a vertical column 102 (such as port column 126, 128), whereupon a robotic container handling vehicle 122, 202, 204 operating on the grid 100 above can lower its lifting frame 311 into the vertical column 102 (e.g. port column 126, 128) to attach to and pick up the container 112, 112A, whereupon the container 112, 112A can be raised to the top of the grid 100 and then transported to another vertical column 102 e.g. for storage in the grid 100.

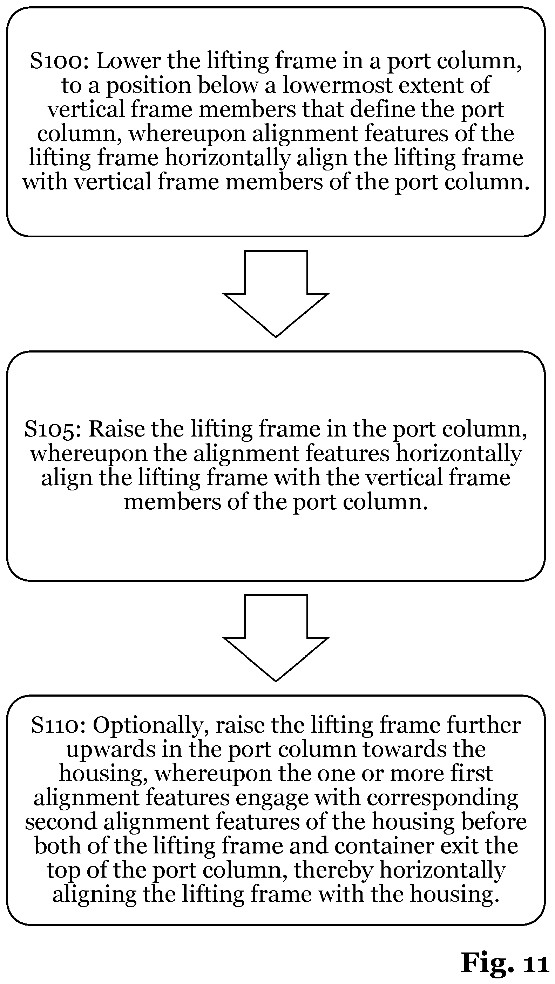

Such a device as described herein can be operated in an automated storage and retrieval system 10 as described herein. A method of operating such a device, as illustrated in Fig. 11, can include, for example, the steps of: lowering the lifting frame 311 in a vertical column 102 (e.g. port column 126, 128), to a position below a lowermost extent of the vertical column 102 (e.g. a lowermost extent of vertical frame members 104 that define the vertical column 102), whereupon the one or more first alignment features 505 of the lifting frame 311 aid horizontal alignment (or continue to horizontally align) the lifting frame 311 with respect to the vertical column (e.g. with respect to vertical frame members 104 that define the vertical column 102); and raising the lifting frame 311 in the vertical column 102 (e.g. port column 126, 128), whereupon the one or more alignment features 505 aid horizontal alignment of the lifting frame 311 with respect to the vertical column 102 (e.g. with respect to frame members 104 that define the vertical column 102), thereby assisting entry of the lifting frame 311 into the vertical column 102 (e.g. port column 126, 128). This aiding of alignment reduces opportunity for damage resulting from misalignment, and permits faster operation.

Optionally, the method can further comprise: raising the lifting frame 311 further upwards in the vertical column 102 (e.g. port column 126, 128) towards the housing 300, whereupon the one or more first alignment features 505 of the lifting frame 311 engage with corresponding ones of second alignment features 506 of the housing 300 before both of the lifting frame 311 and container 112, 112A exit the top of the vertical column 102, thereby aiding horizontal alignment of the lifting frame 311 with the housing 300. This is advantageous when said lifting frame 311 is engaged with a reduced-height container 112A which has a height C that is less than a height F of a full-height container 112, since the height F of a full-height container 112 is typically approximately equal to a distance from the rails of the grid 100 to the underside of the lifting frame 311 when in the fully raised position, and thus in previous devices that lacked the first alignment features 505 of the present disclosure it could occur that a reduced-height container 112A exited the vertical column 102 significantly before the lifting frame 311 reached its fully raised position in the housing 300, which could permit misalignment of the lifting frame 311 with the housing 300 which could lead to collisions between the lifting frame 311 and/or container 112, 112A with the housing 300 or another part of the robotic container handling vehicle 122, 202, 204. Carrying out such method steps with a device according to the present disclosure and defined in the appended claims is safer since there is a reduced chance of damage resulting from misalignment of the lifting frame 311 and/or container 112A either with respect to the housing 300 or with respect to a vertical column 102. More reliable and faster operation is therefore provided for, with reduced maintenance costs.

### Penultimate comments

Also disclosed are the following examples listed as clauses, which may be useful for understanding the present invention.
Clause 1. A device for handling containers in an automated storage and retrieval system of the type comprising a grid having a plurality of vertical columns in which storage containers can be stacked on top of each other, between which vertical columns at least one robotic container handling vehicle is enabled to move, for retrieving storage containers by lifting them out of the vertical columns and for storing storage containers by lowering them into the vertical columns,
   wherein the device comprises:
   a housing;
   a lifting frame arranged for gripping a container; and
   means for raising and lowering the lifting frame with respect to the housing;
   wherein the lifting frame comprises one or more first alignment features, said alignment features being arranged for horizontally aligning the lifting frame with a vertical column of said grid when the lifting frame is positioned below a lowermost extent of said vertical column.
Clause 2. The device of clause 1, wherein said alignment features are arranged for horizontally aligning the lifting frame with one or more vertically oriented portions of the vertical column, when the lifting frame is positioned below a lowermost extent of said vertical column.
Clause 3. The device of clause 1, wherein said alignment features are arranged for horizontally aligning the lifting frame with one or more vertical frame members that define the vertical column, when the lifting frame is positioned below a lowermost extent of said vertical frame members.
Clause 4. The device of any one of clauses 1 to 3, wherein the first alignment features comprise at least one guide extending upwardly from an uppermost portion of the lifting frame.
Clause 5. The device of clause 4, wherein each guide comprises a rod and/or wherein an uppermost portion of each guide is tapered.
Clause 6. The device of clause 4 or 5, wherein each guide is spring-loaded.
Clause 7. The device of any preceding clause, wherein the lifting frame comprises at least two of the first alignment features.
Clause 8. The device of clause 7, wherein the at least two first alignment features are proximate to corresponding corners of the lifting frame such that in use they engage with corresponding ones of the vertical frame members that define the vertical column, and thereby aid alignment of the lifting frame with respect to the vertical column.
Clause 9. The device of any one of clauses 4 to 8, where the length of each guide is sufficient such that even when in use the lifting frame is lowered downwardly out of a lowermost extent of the vertical column, each at least one guide remains at least partially within the extent of the vertical column such that each at least one guide can engage with at least a corresponding portion of the vertical column.
Clause 10. The device of any preceding clause, wherein the device is included in a robotic container handling vehicle of an automated storage and retrieval system of the type comprising a grid having a plurality of vertical columns in which storage containers can be stacked on top of each other, wherein the robotic container handling vehicle is arranged for moving between said vertical columns, for retrieving storage containers by lifting them out of said vertical columns and for storing storage containers by lowering them into said vertical columns.
Clause 11. The device of clause 10, wherein at least one of the vertical columns is arranged to enable transfer of containers between the grid which is above the vertical columns and an underlying container transport arrangement that is provided for transporting containers between a base of the at least one vertical column and a container handling port.
Clause 12. The device of any one of clauses 1 to 11, provided for handling a so-called full-height container having a height (F) that is approximately equal to the distance from rails of the grid, on which rails the robotic container handling vehicles of the automated storage and retrieval system roll, to the underside of the lifting frame when it is in the fully raised position.
Clause 13. The device of any one of clauses 11 to 12, provided for handling a so-called reduced-height container having a height (C) that is less than the height (F) of said full-height container, and wherein the first alignment features have a length (L) which is greater than a distance between a lowermost extent of the vertical column and a top of the lifting frame when the lifting frame is blocked from further downwards movement by the reduced-height container having reached its lowermost position in the grid.
Clause 14. The device of clause 13, wherein the height (F) of the full-height container is approximately equal to the height (H) from the lowermost extent of the vertical column to a surface of the container transport arrangement.
Clause 15. The device of any one of clauses 11 to 14, wherein a minimum length (M) of the first alignment features is defined as a height (H) from the lowermost extent of the vertical column, to a surface of the container transport arrangement, minus a sum of a height (C) of the reduced-height container and a height (F) of the lifting frame.
Clause 16. The device of any one of clauses 13 to 15, wherein the height of the reduced-height container is 220mm or 330mm, and wherein the height of the full-height container is 450mm.
Clause 17. The device of any preceding clause, wherein the housing comprises one or more corresponding second alignment features in the form of apertures for receiving respective ones of the one or more first alignment features and allowing them to pass through the housing such that the lifting frame can be fully raised towards the housing without being blocked by collision of the alignment features and the housing.
Clause 18. The device of any one of clauses 10 to 17, wherein the length (L) of the first alignment features is sufficient that: when the lifting frame is being raised and at least one of the lifting frame and the container are at least partially within a particular vertical column of the grid, the first alignment features engage with the second alignment features before both of the lifting frame and the container fully exit the particular vertical column; and when the lifting frame is being lowered, at least one of the lifting frame and the container at least partially enter a particular vertical column before the first alignment features disengage from the second alignment features.
Clause 19. The device of any one of clauses 11 to 18, wherein the at least one vertical column is a port column, and the container transport arrangement is a conveyor system comprising one or more of rollers and a belt, and arranged for transporting containers between the vertical column and the port, and wherein surface of the container transport arrangement is a top surface of the conveyor system.
Clause 20. The device of any one of clauses 11 to 18, wherein the at least one vertical column is a port column, and the container transport arrangement comprises a further grid with one or more robotic container transporter vehicles operating on it for transporting containers between the vertical column and the port, and wherein the surface of the container transport arrangement is a container-supporting surface of one of said robotic container transporter vehicles which are arranged to receive a container from above.
Clause 21. The device of any preceding clause, wherein the lifting frame has a gripper for gripping a container, the gripper being mounted to the lifting frame.
Clause 22. The device of clause 21, wherein the gripper comprises one or more selectively-engageable gripper features for controllable engagement and disengagement with corresponding features in an upper portion of a container.
Clause 23. A robotic container handling vehicle comprising the device as defined in any one of clauses 1 to 22, the robotic container handling vehicle being for an automated storage and retrieval system comprising a grid, said grid comprising a frame having a plurality of vertical columns in which storage containers can be stacked on top of each other, said vertical columns being defined between vertical frame members of the grid, wherein at least one such robotic container handling vehicle is enabled to move across the top of the grid between the vertical columns and is arranged for retrieving storage containers by lifting them out of the vertical columns and for storing storage containers by lowering them into the vertical columns.
Clause 24. An automated storage and retrieval system comprising a grid, said grid comprising a frame having a plurality of vertical columns in which storage containers can be stacked on top of each other, said vertical columns being defined between vertical frame members of the grid, wherein at least one robotic container handling vehicle is enabled to move across the top of the grid between the vertical columns, wherein the at least one robotic container handling vehicle is arranged for retrieving storage containers by lifting them out of the vertical columns and for storing storage containers by lowering them into the vertical columns, the automated storage and retrieval system further comprising at least one device as defined in any one of clauses 1 to 22.
Clause 25. The automated storage and retrieval system of clause 24, wherein at least one of the vertical columns is a port column that is arranged to enable transfer of containers between the grid which is above the vertical columns and an underlying container transport arrangement that is provided for transporting containers between a base of the port column and a container handling port.
Clause 26. A method of operating a device as defined in any one of clauses 1 to 22, in an automated storage and retrieval system of the type comprising a grid having a plurality of vertical columns in which storage containers can be stacked on top of each other, between which vertical columns at least one robotic container handling vehicle is enabled to move, for retrieving storage containers by lifting them out of the vertical columns and for storing storage containers by lowering them into the vertical columns, wherein the device is included in one or more of said at least one robotic container handling vehicles, the method comprising the steps of:
   lowering the lifting frame in a vertical column of said plurality of vertical columns, to a position below a lowermost extent of the vertical column, whereupon the one or more first alignment features of the lifting frame aid horizontal alignment of the lifting frame with respect to the vertical column; and
   raising the lifting frame in the vertical column, whereupon the one or more first alignment features of the lifting frame aid horizontal alignment of the lifting frame with respect to the vertical column.
Clause 27. The method of clause 26, further comprising:
   raising the lifting frame further upwards in the vertical column towards the housing, whereupon the one or more first alignment features of the lifting frame engage with corresponding ones of second alignment features of the housing before both of the lifting frame and container fully exit the top of the vertical column, thereby aiding horizontal alignment of the lifting frame with respect to the housing.
Clause 28. The method of clause 26 or 27, wherein said lifting frame is engaged with a reduced-height container which has a height (C) that is less than a height (F) of a full-height container, wherein the height (F) of a full-height container is approximately equal to a distance from rails of the grid on which the robotic container handling vehicle rolls, to the underside of the lifting frame when in the fully raised position.
Clause 29. The method of any one of clauses 26 to 28, wherein the vertical column is a port column that is arranged to enable transfer of containers between the grid which is above the vertical columns and an underlying container transport arrangement that is provided for transporting containers between a base of the port column and a container handling port.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

### Glossary

10 - automated storage and retrieval system
100 - grid
102 - vertical column
103 - horizontal support
104 - vertical frame member
112 - bin / container (full-height)
112A - reduced-height container
116 - rail system
122 - robotic container handling vehicle
124 - vertical column access openings
126, 128 - port column
130, 132 - port
202 - cantilever type of robot
204 - internal cavity type of robot
206 - rails / tracks
300 - body or housing
302 - first set of wheels
303 - additional set of wheels
304, 312 - lifting device
305 - bin locating element
306 - cantilever element
307 - lifting band
308- gripping device
309 - gripper e.g. peg
310 - internal cavity
311 - lifting frame
501 - container transport arrangement (conveyor or container transporter(s))
505 - first alignment feature / guide
506 - second alignment feature / aperture

## Claims

1. A device for handling containers in an automated storage and retrieval system of the type comprising a grid having a plurality of vertical columns in which storage containers can be stacked on top of each other, between which vertical columns at least one robotic container handling vehicle is enabled to move, for retrieving storage containers by lifting them out of the vertical columns and for storing storage containers by lowering them into the vertical columns,
wherein the device comprises:
a housing;
a lifting frame arranged for gripping a container; and
means for raising and lowering the lifting frame with respect to the housing;
wherein the lifting frame comprises one or more first alignment features, said alignment features being arranged for horizontally aligning the lifting frame with a vertical column of said grid when the lifting frame is positioned below a lowermost extent of said vertical column.

2. The device of claim 1, wherein said alignment features are arranged for horizontally aligning the lifting frame with one or more vertically oriented portions of the vertical column or with one or more vertical frame members that define the vertical column, when the lifting frame is positioned below a lowermost extent of said vertical column.

3. The device of claim 1 or 2, wherein the first alignment features comprise at least one guide extending upwardly from an uppermost portion of the lifting frame.

4. The device of claim 3, wherein each guide comprises a rod, and optionally wherein an uppermost portion of each guide is tapered, and/or optionally wherein each guide is spring-loaded.

5. The device of any preceding claim, wherein the lifting frame comprises at least two of the first alignment features, wherein the at least two first alignment features are proximate to corresponding corners of the lifting frame such that in use they engage with corresponding ones of the vertical frame members that define the vertical column, and thereby aid alignment of the lifting frame with respect to the vertical column.

6. The device of any one of claims 3 to 5, where the length of each guide is sufficient such that even when in use the lifting frame is lowered downwardly out of a lowermost extent of the vertical column, each at least one guide remains at least partially within the extent of the vertical column such that each at least one guide can engage with at least a corresponding portion of the vertical column.

7. The device of any preceding claim, wherein: the device is included in a robotic container handling vehicle of an automated storage and retrieval system of the type comprising a grid having a plurality of vertical columns in which storage containers can be stacked on top of each other, wherein the robotic container handling vehicle is arranged for moving between said vertical columns, for retrieving storage containers by lifting them out of said vertical columns and for storing storage containers by lowering them into said vertical columns, wherein at least one of the vertical columns is arranged to enable transfer of containers between the grid which is above the vertical columns and an underlying container transport arrangement that is provided for transporting containers between a base of the at least one vertical column and a container handling port;
wherein the device is provided for handling a so-called reduced-height container having a height (C) that is less than the height (F) of a full-height container, said full-height container full-height container having a height (F) that is approximately equal to the distance from rails of the grid, on which rails the robotic container handling vehicles of the automated storage and retrieval system roll, to the underside of the lifting frame when it is in the fully raised position; and
wherein the first alignment features have a length (L) which is greater than a distance between a lowermost extent of the vertical column and a top of the lifting frame when the lifting frame is blocked from further downwards movement by the reduced-height container having reached its lowermost position in the grid.

8. The device of claim 7, wherein a minimum length (M) of the first alignment features is defined as a height (H) from the lowermost extent of the vertical column, to a surface of the container transport arrangement, minus a sum of a height (C) of the reduced-height container and a height (F) of the lifting frame.

9. The device of any preceding claim, wherein the housing comprises one or more corresponding second alignment features in the form of apertures for receiving respective ones of the one or more first alignment features and allowing them to pass through the housing such that the lifting frame can be fully raised towards the housing without being blocked by collision of the alignment features and the housing.

10. The device of claim 9, wherein the length (L) of the first alignment features is sufficient that: when the lifting frame is being raised and at least one of the lifting frame and the container are at least partially within a particular vertical column of the grid, the first alignment features engage with the second alignment features before both of the lifting frame and the container fully exit the particular vertical column; and when the lifting frame is being lowered, at least one of the lifting frame and the container at least partially enter a particular vertical column before the first alignment features disengage from the second alignment features.

11. A robotic container handling vehicle comprising the device as defined in any one of claims 1 to 10, the robotic container handling vehicle being for an automated storage and retrieval system comprising a grid, said grid comprising a frame having a plurality of vertical columns in which storage containers can be stacked on top of each other, said vertical columns being defined between vertical frame members of the grid, wherein at least one such robotic container handling vehicle is enabled to move across the top of the grid between the vertical columns and is arranged for retrieving storage containers by lifting them out of the vertical columns and for storing storage containers by lowering them into the vertical columns.

12. An automated storage and retrieval system comprising a grid, said grid comprising a frame having a plurality of vertical columns in which storage containers can be stacked on top of each other, said vertical columns being defined between vertical frame members of the grid, wherein at least one robotic container handling vehicle is enabled to move across the top of the grid between the vertical columns, wherein the at least one robotic container handling vehicle is arranged for retrieving storage containers by lifting them out of the vertical columns and for storing storage containers by lowering them into the vertical columns, the automated storage and retrieval system further comprising at least one device as defined in any one of claims 1 to 10.

13. A method of operating a device as defined in any one of claims 1 to 10, in an automated storage and retrieval system of the type comprising a grid having a plurality of vertical columns in which storage containers can be stacked on top of each other, between which vertical columns at least one robotic container handling vehicle is enabled to move, for retrieving storage containers by lifting them out of the vertical columns and for storing storage containers by lowering them into the vertical columns, wherein the device is included in one or more of said at least one robotic container handling vehicles, the method comprising the steps of:
lowering the lifting frame in a vertical column of said plurality of vertical columns, to a position below a lowermost extent of the vertical column, whereupon the one or more first alignment features of the lifting frame aid horizontal alignment of the lifting frame with respect to the vertical column; and
raising the lifting frame in the vertical column, whereupon the one or more first alignment features of the lifting frame aid horizontal alignment of the lifting frame with respect to the vertical column.

14. The method of claim 13, further comprising:
raising the lifting frame further upwards in the vertical column towards the housing, whereupon the one or more first alignment features of the lifting frame engage with corresponding ones of second alignment features of the housing before both of the lifting frame and container fully exit the top of the vertical column, thereby aiding horizontal alignment of the lifting frame with respect to the housing.

15. The method of claim 13 or 14, wherein said lifting frame is engaged with a reduced-height container which has a height (C) that is less than a height (F) of a full-height container, wherein the height (F) of a full-height container is approximately equal to a distance from rails of the grid on which the robotic container handling vehicle rolls, to the underside of the lifting frame when in the fully raised position.
